# EUROPÄISCHE PATENTANMELDUNG

(11) **EP 3 147 832 A1**
(43) Veröffentlichungstag der Anmeldung: **29.03.2017**
(21) Anmeldenummer: 15193351.2
(22) Anmeldetag: 06.11.2015
(51) Int. Cl.: G06Q 10/00

(54) **DATENVERARBEITUNGSANLAGE UND VERFAHREN FÜR DIESE ZUR ZUSTANDSÜBERWACHUNG EINER MEHRZAHL AN FAHRZEUGEN**

(30) Priorität: 23.09.2015 DE 102015218262
(71) Anmelder: Volkswagen Aktiengesellschaft, 38440 Wolfsburg (DE)
(72) Erfinder: Richter, Felix, 30455 Hannover (DE); Aymelek, Tetiana, 74321 Bietigheim-Bissingen (DE); Sasse, Andreas, 38112 Braunschweig (DE)
(74) Vertreter: Jepsen, Ralph

(57) **Zusammenfassung**

Bereitgestellt wird ein Verfahren für eine Datenverarbeitungsanlage zur Zustandsüberwachung einer Mehrzahl an Fahrzeugen. Dabei beinhaltet das Verfahren ein Bestimmen auf Basis von Zustandsinformationen aus einer mit der Datenverarbeitungsanlage gekoppelten Datenbank, ob für ein Fahrzeug der Mehrzahl an Fahrzeugen eine Abweichung eines Zustands des Fahrzeugs von einem Sollzustand vorliegt. Ferner beinhaltet das Verfahren ein Senden einer Nachricht an zumindest das eine Fahrzeug unabhängig davon, ob die Abweichung des Zustands des Fahrzeugs von dem Sollzustand vorliegt. Die Nachricht enthält dabei eine Information, welche die durch die Zustandsinformationen repräsentierte Abweichung von dem Sollzustand betrifft.

## Beschreibung

Die vorliegende Erfindung betrifft die Zustandsüberwachung einer Mehrzahl an Fahrzeugen. Ausführungsbeispiele der vorliegenden Erfindung betreffen eine Datenverarbeitungsanlage und ein Verfahren für diese zur Zustandsüberwachung einer Mehrzahl an Fahrzeugen.

Die Zustandsüberwachung einer Mehrzahl an Fahrzeugen, beispielsweise eines Teils oder der gesamten Fahrzeugflotte eines Fahrzeugherstellers oder eines Fuhrparkbetreibers, steht zunehmend im Fokus, um Probleme innerhalb einer Fahrzeugflotte zu erkennen und reagieren zu können. Bei den Fahrzeugen kann es sich sowohl um Personen- als auch um Nutzfahrzeuge handeln. Zum Beispiel kann ein Fahrzeug ein Personenkraftwagen, ein Lastkraftwagen, ein Motorrad oder ein Traktor sein. Allgemein kann ein Fahrzeug als eine Vorrichtung aufgefasst werden, die einen Motor, ein Antriebsstrangsystem sowie Räder umfasst.

Die Zustandsüberwachung einer Mehrzahl an Fahrzeugen erfolgt oftmals durch eine semimanuelle Auswertung von Wartungsdaten (z.B. Kundendienstdaten) der Fahrzeuge. Mit anderen Worten, können Probleme bzw. Fehlfunktionen innerhalb der Fahrzeugflotte erst nach ihrem Auftreten erkannt werden. Systematische Probleme innerhalb der Fahrzeugflotte (d.h. Probleme die mehrere Fahrzeuge der Flotte betreffen) können oftmals nur durch die besondere Expertise erfahrener und qualifizierter Angestellter des Fahrzeugherstellers oder des Fuhrparkbetreibers erkannt werden. Ebenso werden Lösungen für die erkannten Probleme gewöhnlich manuell, d.h. erst bei Anfall des Problems und durch einen oder mehrere Menschen, erarbeitet.

Um den vorgenannten Problemen zu begegnen, wird beispielsweise in der Druckschrift DE 10 2014 105 674 A1 vorgeschlagen, bei einem vom Fahrzeug selbst erkannten Fehlerauslöser, Information über den Fehlerauslöser und weitere Fahrzeugdaten an einen Computer einer Werkstatt oder einen Hauptserver zu senden. Dort werden die empfangen Daten analysiert und ein Fehlerbericht sowie eine Terminanfrage der Werkstatt werden durch einen Computer der Werkstatt an das Fahrzeug gesendet. Die Analyse, d.h. die Überwachung des Fahrzeugzustands erfolgt dabei aber ausschließlich in Folge der Detektion des Fehlerauslösers. Somit erfolgt auch hier das Eingreifen erst nach Auftreten eines Fehlers am Fahrzeug. Weiterhin erfolgt das Senden des Fehlerberichts sowie der Terminanfrage immer über die Werkstatt, was aufgrund der nachfolgenden Gründe nachteilhaft ist. Zunächst müssen für die Sicherstellung einer korrekten Ausführung des Verfahrens die Computer der Werkstätten aktuell gehalten werden, wodurch für jede einzelne Werkstatt sowohl ein zeitlicher als auch ein finanzieller Aufwand entsteht. Weiterhin können bei der Kommunikation zwischen Hauptserver und Werkstattcomputer, Übertragungsverzögerungen oder Übertragungsfehler bis hin zu einem kompletten Datenverlust auftreten. Beispielsweise kann ein Werkstattmitarbeiter versehentlich den Computer nach Feierabend oder am Wochenende ausschalten, sodass keine Kommunikation über den Werkstattcomputer möglich ist. Auch kann es aufgrund der an das Fahrzeug übermittelten Terminanfrage seitens der Werkstatt zu einer Verzögerung der Zustellung des Fehlerberichts an das Fahrzeug kommen, da beispielsweise erst ein Werkstattmitarbeiter einen passenden Termin suchen muss. Das in der Druckschrift DE 10 2014 105 674 A1 vorgeschlagene Verfahren ist daher nur bedingt geeignet die vorgenannten Probleme anzugehen.

Weiterhin wird in der Druckschrift DE 102 35 525 A1 vorgeschlagen, Betriebsdaten eines Fahrzeugs an ein externes Zustandsüberwachungssystem zu senden, um diese dort zu analysieren. Basierend auf dem Analyseergebnis wird eine Werkstatt über einen bereits bestehenden oder einen erwarteten Defekt am Fahrzeug informiert. Die Werkstatt kann mit dieser Information wiederrum den Fahrzeughalter bzw. Fahrzeugführer kontaktieren (z.B. telefonisch, per SMS oder per E-Mail), um ihn über den Defekt zu informieren und eine Reparatur zu vereinbaren. Auch bei diesem vorgeschlagenen Verfahren ist das Tätigwerden einer Werkstatt nötig, so dass es wiederrum zu zeitlichen Verzögerungen bis zur tatsächlichen Information des Fahrzeughalters oder Fahrzeugführers über den Defekt kommt. Ebenso kann es in diesem Verfahren wiederrum zu Verzögerungen oder Datenverlusten bei der Kommunikation zwischen Zustandsüberwachungssystem und Werkstatt kommen. Zudem kann z.B. bei einer Benachrichtigung des Fahrzeughalters oder Fahrzeugführers per E-Mail die E-Mail von einem Spam-Filter ausgefiltert werden, so dass der Fahrzeughalter oder Fahrzeugführer verspätet oder gar nicht von dem Defekt bzw. Problem am Fahrzeug erfährt. Somit ist auch das in der Druckschrift DE 102 35 525 A1 vorgeschlagene Verfahren nur bedingt zur Lösung der vorgenannten Probleme geeignet.

In der Druckschrift US 2014 / 0277902 A1 wird vorgeschlagen, für einen ausgegebenen Fehlercode eines Fahrzeugs Informationen aus dem Internet abzurufen und diese einem Nutzer des Dienstes zu präsentieren (z.B. in einem Browser oder einer Applikation). Beispielsweise sollen dem Nutzer Informationen aus Foren oder sozialen Netzwerken präsentiert werden. Auch hier wird erst nach Fehlereintritt gehandelt. Weiterhin werden dem Nutzer des Dienstes lediglich ungeprüfte Informationen aus dem Internet präsentiert, so dass dem Nutzer auch falsche Informationen präsentiert werden können. Dies kann möglicherweise zu einer Verunsicherung des Nutzers führen. Das Verfahren der Druckschrift US 2014 / 0277902 A1 ist daher nur bedingt geeignet, um die vorgenannten Probleme anzugehen.

Es besteht somit ein Erfordernis, eine Zustandsüberwachung für eine Mehrzahl an Fahrzeugen bereitzustellen, die bereits vor einem tatsächlichen Fehlerauftritt auf (mögliche) Probleme am Fahrzeug hinweisen kann und diese Informationen unmittelbar dem Fahrzeug bzw. einem Fahrzeugführer bereitstellen kann.

Ausführungsbeispiele der vorliegenden Erfindung ermöglichen dies durch ein Verfahren für eine Datenverarbeitungsanlage zur Zustandsüberwachung einer Mehrzahl an Fahrzeugen. Bei der Datenverarbeitungsanlage handelt es sich um ein Rechensystem z.B. eines Fahrzeugherstellers oder eines Fuhrparkbetreibers. Insbesondere kann es sich um eine zentrale Datenverarbeitungsanlage handeln. Die zentrale Datenverarbeitungsanlage kann z.B. aus einem oder mehreren gekoppelten Servern bzw. einem oder mehreren gekoppelten Rechenzentren bestehen. Die einzelnen Einheiten bilden dabei in ihrer Gesamtheit ein System, das Daten empfängt, speichert verarbeitet und abgibt. Die Standorte einzelner Elemente der Datenverarbeitungsanlage können lokal verschieden sein (z.B. zwei verschiedene Rechenzentren), jedoch bilden sie in ihrem Zusammenwirken ein System, dass zentral die Überwachung der Mehrzahl an Fahrzeugen durchführt. Die Datenverarbeitungsanlage ist somit insbesondere kein Netzwerk aus verteilten Recheneinheiten, die jeweils für sich eine Zustandsüberwachung eines oder mehrerer Fahrzeuge ausführen. Vielmehr stellt die Datenverarbeitungsanlage ein Backend dar, in dem die zentrale Verarbeitung der eingehenden Daten stattfindet.

Das Verfahren umfasst dabei, auf Basis von Zustandsinformationen aus einer mit der Datenverarbeitungsanlage gekoppelten Datenbank, ein Bestimmen, ob für ein Fahrzeug der Mehrzahl an Fahrzeugen eine Abweichung eines Zustands des Fahrzeugs von einem Sollzustand vorliegt.

Bei den Zustandsinformationen kann es sich um statische oder veränderbare Informationen über mögliche Fahrzeugzustände handeln. Die Zustandsinformationen repräsentieren dabei einen möglichen momentanen oder zukünftigen Zustand des Fahrzeugs, der von einem Sollzustand des Fahrzeugs abweicht. Der Zustandsinformationen zeigen somit einen Fahrzeugzustand an, der von einem gewünschten Sollzustand abweicht. Der gewünschte Sollzustand kann dabei beispielsweise auf Vorgaben eines Fahrzeugherstellers basieren und einen gewünschten Zustand des Fahrzeugs zu einem momentanen oder einem zukünftigen Zeitpunkt anzeigen. Bei der Abweichung kann es z.B. sich um einen möglichen bestehenden oder einen möglichen zukünftigen Defekt am Fahrzeug handeln. Beispielsweise können die Zustandsinformationen anzeigen, dass vermutlich ein Defekt an einem Motorsteuergerät des Fahrzeugs vorliegt. Dafür umfassen die Zustandsinformationen eine Gruppe an Fahrzeugdaten bzw. Fahrzeugparametern, die typisch bzw. charakteristisch für den repräsentierten Schaden sind. Das heißt, für den durch die Zustandsinformationen repräsentierten Schaden ist ein charakteristisches Profil bzw. Muster gespeichert. Für das einzelne Fahrzeug kann durch einen Vergleich mit den Zustandsinformationen bestimmt werden, ob bereits ein Schaden oder ob wahrscheinlich (möglicherweise) zukünftig ein Schaden am Fahrzeug vorliegt. Beispielsweise kann dies durch einen Vergleich von Informationen über den Fahrzeugtyp, die Fahrzeugbaureihe, den Fertigungszeitraum oder sonstige das Fahrzeug charakterisierende Eigenschaften mit in den Zustandsinformationen enthaltenen Informationen über die von dem durch die Zustandsinformationen repräsentierten Schaden bisher betroffen Fahrzeuge erfolgen. Alternativ oder ergänzend kann beispielsweise auch ein Vergleich basierend auf empfangenen Zustandsdaten des Fahrzeugs erfolgen. Weitere Details hierzu werden im Zusammenhang mit spezifischen Ausführungsbeispielen der vorliegenden Erfindung diskutiert. Durch den oben dargestellten Verfahrensschritt kann eine effektive Zustandsüberwachung für ein einzelnes Fahrzeug der Mehrzahl an Fahrzeug und daher für die Gesamtheit der Mehrzahl an Fahrzeugen gewährleistet werden.

Ferner umfasst das Verfahren ein Senden einer Nachricht an zumindest das eine Fahrzeug unabhängig davon, ob die Abweichung des Zustands des Fahrzeugs von dem Sollzustand vorliegt. Die Nachricht enthält dabei eine Information, welche die durch die Zustandsinformationen repräsentierte Abweichung von dem Sollzustand betrifft. Das heißt, zumindest an das eine Fahrzeug wird unabhängig von einer festgestellten Abweichung des Zustands des Fahrzeugs von dem Sollzustand eine die von den Zustandsinformationen repräsentierte Abweichung betreffende Information gesendet. Somit können dem Fahrzeug schadensunabhängig Informationen über Probleme, Schäden, Defekte oder sonstige Abweichungen vom Sollzustand mitgeteilt werden. Dem Fahrzeug kann somit bereits vor Auftritt eines möglichen Schadens Informationen über diesen mitgeteilt werden. Beispielsweise kann die Abweichung vom Sollzustand ein Defekt an einem bestimmten Fahrzeugbauteil bei einer bestimmten Laufleistung des Fahrzeugs sein, der bei Fahrzeugen einer Modellreihe - zu der auch das Fahrzeug gehört - vermehrt aufgetreten ist, sein. Obwohl der Defekt am dem Fahrzeug noch nicht aufgetreten ist, kann dem Fahrzeug somit bereits die Information über dieses mögliche, zukünftige Problem mitgeteilt werden. Das Fahrzeug kann die Information weiter verarbeiten. Zum Beispiel kann die Information an einen Fahrzeugführer oder sonstige Insassen ausgegeben werden, so dass diese auf das mögliche Problem am Fahrzeug reagieren können. Beispielsweise kann ein Fahrzeugführer so bereits vor Auftritt des Defekts eine Werkstatt zur Diagnose bzw. Reparatur aufsuchen oder selbst die Reparatur durchführen. Dafür kann die in der Nachricht enthaltene Information z.B. entsprechende Lösungen enthalten. Weitere Details hierzu werden im Zusammenhang mit spezifischen Ausführungsbeispielen der Erfindung näher diskutiert.

Zusammenfassend kann durch das Verfahren gemäß Ausführungsbeispielen der vorliegenden Erfindung bereits vor einem tatsächlichen Fehlerauftritt auf (mögliche) Probleme am Fahrzeug hingewiesen werden. Diese Information kann unmittelbar dem Fahrzeug bzw. einem Fahrzeugführer bereitgestellt werden, da die Kommunikation direkt zwischen der (zentralen) Datenverarbeitungsanlage und dem Fahrzeug stattfindet. Ein Tätigwerden Dritter (z.B. eine Werkstatt) kann somit vermieden werden.

In einigen Ausführungsbeispielen umfasst das Verfahren ferner ein Empfangen, an der Datenverarbeitungsanlage, von fahrzeugspezifischen Zustandsdaten von einzelnen Fahrzeugen der Mehrzahl an Fahrzeugen. Bei den fahrzeugspezifischen Zustandsdaten handelt es sich um im jeweiligen Fahrzeug gemessene bzw. erzeugte Daten, die einen momentanen Zustand oder eine Zustandshistorie des jeweiligen Fahrzeugs anzeigen. Zum Beispiel kann es sich bei den Zustandsdaten um eine aktuelle Motordrehzahl oder einen Verlauf der Motordrehzahl handeln. Die Zustandsdaten können z.B. weiterhin Temperaturen eines oder mehrerer Fahrzeugkomponenten, eine Anzahl an Fahrzeuginsassen, Geschwindigkeiten, Geschwindigkeitsverläufe, Beschleunigungs- oder Bremsverläufe, Fehlermeldungen eines Steuergeräts des Fahrzeugs, oder einen Kilometerstand umfassen. Auch können die fahrzeugspezifischen Zustandsdaten Informationen wie eine Fahrgestellnummer, einen Modelltyp des Fahrzeugs oder Informationen über die verwendete Revision einer Software oder Firmware des Fahrzeugs umfassen. Auch umfasst das Verfahren ein Erzeugen der Zustandsinformationen basierend auf den empfangenen fahrzeugspezifischen Zustandsdaten. Es werden also aus Erfahrungswerten anderer Fahrzeuge Schadensmuster bzw. Schadenscharakteristika definiert, die als Zustandsinformationen in der Datenbank gespeichert sind. Fahrzeugführer jüngerer Fahrzeuge können daher von den Erfahrungen bzw. Erkenntnissen älterer Fahrzeuge profitieren, da an den älteren Fahrzeugen aufgetretene Probleme bzw. Defekte aufgrund der an das jüngere Fahrzeug gesendeten Information vor ihrem Auftritt präventiv behoben werden können oder der Fahrzeugführer zumindest über die Probleme informiert werden kann.

Gemäß einigen Ausführungsbeispielen umfasst das Verfahren daher für das Bestimmen, ob eine Abweichung des Zustands des einen Fahrzeugs von dem Sollzustand vorliegt, ein Vergleichen einer Charakteristik des einen Fahrzeugs mit den Zustandsinformationen. Bei der Charakteristik des einen Fahrzeugs kann es sich zum einen um statische Informationen wie einen Modelltyp, ein Baujahr, einen Fertigungszeitraum, einen Fertigungsort oder sonstige feste Eigenschaften des Fahrzeugs handeln. Zum anderen kann es sich bei der Charakteristik des einen Fahrzeugs auch um Informationen handeln, die einen aktuellen Zustand des Fahrzeugs beschreiben. Natürlich kann es sich bei der Charakteristik des einen Fahrzeugs auch um eine Kombination der vorgenannten Informationen handeln. Durch das Vergleichen der Charakteristik des Fahrzeugs mit den Zustandsinformationen kann bestimmt werden, ob die durch die Zustandsinformationen repräsentierte Abweichung vom Sollzustand für das eine Fahrzeug relevant ist. Das heißt, durch den Vergleich kann bestimmt werden, ob die Fahrzeugcharakteristik mit dem charakteristisches Profil bzw. Muster des durch die Zustandsinformationen repräsentierten Schadens übereinstimmt. Dadurch kann mit hoher Genauigkeit eine momentane oder zukünftige Abweichung des Fahrzeugs vom Sollzustand bestimmt werden.

In einigen Ausführungsbeispielen kann das Vergleichen der Charakteristik des einen Fahrzeugs mit den Zustandsinformationen daher ein Empfangen von Zustandsdaten von dem einen Fahrzeug sowie ein Bestimmen eines Zustands des Fahrzeugs aus den von dem Fahrzeug empfangenen Zustandsdaten umfassen. Bei dem Zustand des Fahrzeugs handelt es sich um eine aus den Fahrzeugdaten generierte Charakteristik des Fahrzeugs, das einen momentanen oder einen zukünftigen Zustand des Fahrzeugs beschreibt. Beispielsweise können für die Bestimmung des Fahrzeugzustands Fahrzeugmodelle (z.B. ein Prädiktionsmodell) oder Algorithmen verwendet werden, um die empfangenen Zustandsdaten des Fahrzeugs auszuwerten. Die für den Vergleich mit den Zustandsdaten verwendete Charakteristik des Fahrzeugs umfasst dabei den Zustand des Fahrzeugs. Das heißt, der ermittelte Fahrzeugzustand wird in die Bestimmung, ob eine Abweichung des Fahrzeugzustands vom Sollzustand vorliegt, einbezogen. Dadurch kann mit hoher Genauigkeit festgestellt werden, ob dieses Fahrzeug von der durch die Zustandsinformationen repräsentieren Abweichung vom Sollzustand betroffen ist oder wahrscheinlich betroffen sein wird. Insbesondere, wenn es sich bei dem Zustand des Fahrzeugs um einen prädizierten, zukünftigen Zustand handelt, kann bereits vor Schadenseintritt ermittelt werden, ob das Fahrzeug vermutlich betroffen ist.

Gemäß einigen Ausführungsbeispielen ist der Zustand des einen Fahrzeugs daher ein zukünftiger Zustand, der auf einem Prädiktionsmodell und den von dem einen Fahrzeug empfangenen Zustandsdaten basiert. Durch die Prädiktion des Zustands des Fahrzeugs kann ein Vergleich eines wahrscheinlichen zukünftigen Zustands des Fahrzeugs mit den Zustandsinformationen der Datenbank erfolgen. Somit können wahrscheinliche zukünftige Probleme am Fahrzeug erkannt und dem Fahrzeug durch die in der Nachricht enthaltene Information mitgeteilt werden. Entsprechend kann ein Fahrzeugführer präventiv reagieren. Basierend auf dem verwendeten Fahrzeugmodell bzw. Prädiktionsmodell kann in einigen Ausführungsbeispielen sogar ein Zeitpunkt des vermuteten Schadensauftritts bestimmt werden. Ein Fahrzeugführer kann somit zielgerichtet auf den wahrscheinlichen Schadensfall reagieren.

Die von den jeweiligen Fahrzeugen der Mehrzahl an Fahrzeugen empfangen Zustandsdaten enthalten in einigen Ausführungsbeispielen Informationen über Fehler im Fahrzeug oder Informationen über eine Fahrzeugbelastung. Bei den Fehlern im Fahrzeug kann es sich z.B. um von Steuergeräten ausgegebene Fehlercodes handeln. Bei den Informationen über die Fahrzeugbelastung kann es sich um verschiedene momentane Messwerte bzw. berechnete Werte oder zeitliche Entwicklungen von Messwerten bzw. berechneten Werten handeln. Informationen über eine Fahrzeugbelastung können von Komponenten des Fahrzeugs bereitgestellt werden und direkt an die Datenverarbeitungsanlage gesendet werden oder von einem Steuergerät im Fahrzeug gesammelt und aufbereitet werden. Zum Beispiel kann von dem Steuergerät ein Histogramm eines interessierenden Wertes bestimmt werden. Beispielsweise können die zeitlichen Verläufe einer Motorendrehzahl, von Temperaturen eines oder mehrerer Fahrzeugkomponenten, einer Anzahl an Fahrzeuginsassen, einer Fahrzeuggeschwindigkeit, von Beschleunigungen oder Bremsvorgängen erfasst und an die (zentrale) Datenverarbeitungsanlage gesendet werden. Mit einer breiten Basis an den Fahrzeugzustand charakterisierenden Daten kann der Zustand des Fahrzeugs genauer bestimmt werden und somit eine Genauigkeit des Vergleichs mit den Zustandsinformationen aus der Datenbank verbessert werden. Somit kann das Fahrzeug bzw. ein Fahrzeugführer mit verbesserter Genauigkeit über (mögliche) Probleme am Fahrzeug informiert werden.

Gemäß einigen Ausführungsbeispielen basieren die Zustandsinformationen weiterhin auf frei zugänglichen Daten aus dem Internet und / oder Wartungsdaten eines Fahrzeugherstellers und / oder Wartungsdaten einer Werkstatt. Bei den frei zugänglichen Daten aus dem Internet kann es sich z.B. um Einträge aus Foren, um Daten aus sozialen Netzwerken oder um Daten von Websites handeln. Heutzutage werden Probleme bzw. Defekte an Fahrzeugen vielfach im Internet von betroffenen bzw. interessierten Nutzern diskutiert, so dass diese Informationen eine Erhöhung der Genauigkeit der Schadensmuster bzw. Schadenscharakteristika einer von den Zustandsinformationen repräsentierten Abweichung vom Sollzustand des Fahrzeugs bzw. überhaupt erst das Erkennen einer Abweichung vom Sollzustand des Fahrzeugs ermöglichen können. Ebenso können die Wartungsdaten eines Fahrzeugherstellers bzw. einer Werkstatt (z.B. Vertragswerkstatt oder freie Werkstatt) zusätzliche Informationen für die Erzeugung bzw. Modellierung der Zustandsinformationen liefern. Eine Genauigkeit bzw. Akkuratesse des Schadensmusters bzw. der Schadenscharakteristik einer von den Zustandsinformationen repräsentierten Abweichung vom Sollzustand des Fahrzeugs kann somit erhöht werden. Insgesamt kann eine Datenbasis für eine von den Zustandsinformationen repräsentierten Abweichung vom Sollzustand des Fahrzeugs vergrößert und somit eine Akkuratesse der für die Abweichung vom Sollzustand gespeicherten Fahrzeugdaten bzw. Fahrzeugparametern, die typisch bzw. charakteristisch für den von den Zustandsinformationen repräsentierten Schaden bzw. Zustand sind, erhöht werden.

Die Zustandsinformationen enthalten in einigen Ausführungsbeispielen zumindest eine Lösung, um den Sollzustand herzustellen. Dabei umfasst die in der Nachricht enthaltene Information die Lösung. Durch das Vorhalten einer Lösung in der Datenbank, die es erlaubt, den Sollzustand des Fahrzeugs (wieder-) herzustellen, kann dem Fahrzeug bzw. dem Fahrzeugführer bei einem Schadensfall als auch bereits davor eine Lösung präsentiert werden. Die vorgehaltene Lösung kann zudem eine Wiederherstellung des Sollzustandes des Fahrzeugs sowohl zeitlich beschleunigen als auch verbilligen, da die Lösung für das Problem nicht erst entwickelt werden muss. Mit anderen Worten: Die Lösung muss lediglich einmal erzeugt werden, um sie einer Vielzahl (möglicher) betroffener Fahrzeug zur Verfügung zu stellen. Bei der Lösung kann es sich um vielerlei Informationen handeln. Beispielsweise kann die Lösung in dem Hinweis liegen, eine Werkstätte zur Kontrolle bzw. Reparatur des Fahrzeugs auszusuchen. Alternativ oder ergänzend kann die Lösung auch eine Anleitung zur Behebung des Defekts bzw. Schadens umfassen. Ergänzend kann die Lösung auch Informationen über den Bezug benötigter Ersatz- bzw. Austauschteile enthalten. Beispielsweise kann die Lösung eine oder mehrere Bezugsquellen für ein Ersatzteil umfassen. Zum Beispiel kann die Lösung auf einem Bildschirm des Fahrzeugs ausgegeben werden und die Reparaturhinweise unmittelbar bzw. in Form von Verweisen auf Websites enthalten. Ebenso kann die Lösung Verweise auf Websites einer oder mehrerer Bezugsquellen für ein Ersatzteil umfassen, so dass ein Fahrzeugführer unmittelbar ein Ersatzteil ordern kann. Ergänzend kann die Nachricht mit der Lösung z.B. auch an eine mit dem Fahrzeug assoziierte Email-Adresse (z.B. eines Fahrzeughalters) gesendet werden oder über eine Applikation auf einem Mobilkommunikationsgerät (z.B. Mobiltelefon oder Tablet-Computer) zur Verfügung gestellt werden.

In einigen Ausführungsbeispielen kann zudem die Art der Lösung, die an das Fahrzeug übermittelt werden soll, ausgewählt werden. Beispielsweise kann ein Fahrzeughalter auswählen, dass er nur einen Hinweis erhalten möchte, dass er eine Werkstatt zur Fehlerbehebung aufsuchen soll. Ein technisch interessierter Fahrzeughalter kann z.B. auswählen, dass er nur die Reparaturhinweise oder die Reparaturhinweise sowie zusätzlich den Hinweise, eine Werkstatt aufzusuchen, erhalten möchte. Somit kann die Art der mitgeteilten Lösung an die individuellen Interessen eines Fahrzeughalters angepasst werden.

Gemäß Ausführungsbeispielen kann die Lösung (zusammen mit den sonstigen empfangenen Informationen) im Fahrzeug gespeichert werden, so dass z.B. ein Mechaniker einer Werkstatt die Informationen auslesen und unmittelbar mit der Instandsetzung des Fahrzeugs beginnen kann. Somit kann zum einen die Fahrzeuginstandsetzung für den Mechaniker vereinfacht und beschleunigt werden und zum anderen kann für einen Fahrzeughalter die Fahrzeuginstandsetzung verbilligt werden.

In einigen Ausführungsbeispielen können die Zustandsinformationen eine Abweichung vom Sollzustand des Fahrzeugs repräsentieren, die durch das Fahrzeug selbst behoben werden kann. Beispielsweise kann es sich dabei um Software- bzw. Firmwarefehler oder-probleme im Fahrzeug handeln. Beispielsweise kann die Lösung darin bestehen, die entsprechende Software- oder Firmware zurückzusetzen (d.h. zu resetten) oder ein Update einzuspielen. Die Lösung kann daher auch eine Anweisung für ein Steuergerät des Fahrzeugs umfassen, eine Software- oder Firmware zu resetten. Auch kann die Lösung beispielsweise ein Update für eine Software- oder Firmware und die Anweisung für ein Steuergerät, das Update auszuführen, umfassen.

Gemäß einigen Ausführungsbeispielen kann die Lösung auf von der Mehrzahl an Fahrzeugen empfangenen Zustandsdaten und / oder frei zugänglichen Daten aus dem Internet und / oder Wartungsdaten eines Fahrzeugherstellers und / oder Wartungsdaten einer Werkstatt basieren. Dadurch kann eine breite Datenbasis für Lösung gewährleistet sein, zudem kann bei einer Vielzahl an Quellen für die Lösungsgenerierung die Expertise vieler genutzt werden, um so Lösungen hoher Qualität zu erzielen. Die Lösung kann insbesondere automatisch durch die Datenverarbeitungsanlage erzeugt werden. Auch können die vorgenannten Datenquellen kontinuierlich (z.B. periodisch) abgefragt werden, um so kontinuierlich eine Lösung erzeugen bzw. aktualisieren zu können. Auch können so mehrere Lösungen für einen Warnzustand erzeugt werden, so dass einem Fahrzeug bzw. Fahrzeugführer mehrere Alternativen präsentiert werden können.

In einigen Ausführungsbeispielen erfolgt das Bestimmen, ob eine Abweichung des Zustands des Fahrzeugs von dem Sollzustand vorliegt, kontinuierlich. Insbesondere kann das Bestimmen, ob eine Abweichung des Zustands des Fahrzeugs von dem Sollzustand vorliegt, periodisch erfolgen. Auch weitere Verfahrensschritte, wie das Empfangen von Zustandsdaten, das Bestimmen des Zustands des einen Fahrzeugs, und das Vergleichen der Charakteristik des Fahrzeugs mit den Zustandsinformationen können periodisch erfolgen. Zum Beispiel kann alle 5, 10, 15, 30, 45, 60 oder 90 Minuten bestimmt werden, ob eine Abweichung des Zustands des Fahrzeugs von dem Sollzustand vorliegt. Durch das kontinuierliche Bestimmen, ob eine Abweichung des Zustands des Fahrzeugs von dem Sollzustand vorliegt, können mögliche Probleme bzw. kritische Zustände am Fahrzeug mit geringem Zeitversatz, d.h. beinahe in Echtzeit, bestimmt und dem Fahrzeug mitgeteilt werden. Durch das periodische Empfangen der Zustandsdaten des Fahrzeugs kann gemäß einigen Ausführungsbeispielen zu dem eine Historie des Zustands des Fahrzeugs erzeugt und gespeichert werden. Das Wissen um die Historie des Fahrzeugs kann die Genauigkeit der Bestimmung eines momentanen oder zukünftigen Zustands des Fahrzeugs verbessern, da z.B. Zustands- bzw. Prädiktionsmodelle verwendet werden können, die auch die Zustandshistorie des Fahrzeugs berücksichtigen. Somit kann insgesamt eine Genauigkeit der Schadensbestimmung bzw. der Bestimmung möglicher Schäden des Fahrzeugs erhöht werden. Dem Fahrzeug und somit z.B. auch einem Fahrzeugführer können somit genauere Ergebnisse bzw. exaktere Prädiktionen zur Verfügung gestellt werden. Die kontinuierliche Ausführung der einzelnen vorgenannten Verfahrensschritte muss dabei nicht 24 Stunden am Stück an 7 Tagen der Woche stattfinden. Vielmehr kann die Ausführung der Verfahrensschritte auch auf bestimmte Zeitfenster beschränkt sein. Zum Beispiel kann das Verfahren nur saisonal ausgeführt werden oder nur zu bestimmten Tages- oder Nachtzeiten.

Gemäß einigen Ausführungsbeispielen wird die Nachricht an alle Fahrzeuge der Mehrzahl an Fahrzeugen gesendet, falls eine Abweichung des Zustands des Fahrzeugs von dem Sollzustand vorliegt und das Fahrzeug zu einer vorbestimmten Gruppe der Mehrzahl von Fahrzeugen gehört. Beispielsweise kann ein Fahrzeughersteller eine Gruppe an Test- bzw. Musterfahrzeug unterhalten, um Erkenntnisse über den Fahrzeugzustand im Laufe des Fahrzeugbetriebs zu sammeln. Wird nun bei einem solchen Fahrzeug ein Abweichen vom Sollzustand erkannt, kann dies möglicherweise auf ein Problem aller Fahrzeuge, aller Fahrzeuge einer gesamten Modellreihe oder aller Fahrzeuge eines bestimmten Fertigungszeitraums hindeuten. Entsprechend können diese Fahrzeuge bzw. ein Fahrzeugführer präventiv informiert werden.

In einigen Ausführungsbeispielen basieren Zustandsinformationen auf einer Eingabe eines Benutzers der Datenverarbeitungsanlage. Die Eingabe des Benutzers kann dabei direkt an der Datenverarbeitungsanlage erfolgen oder auch von einem entfernten Ort (z.B. über einen Remotezugriff von einem entfernten Rechner auf die Datenverarbeitungsanlage). Beispielsweise kann ein Fahrzeughersteller nach Erkenn eines Problems an einem Bauteil oder einer Software alle Fahrzeuge, die dieses Bauteil aufweisen, über das Problem benachrichtigen. Mit anderen Worten kann z.B. eine Serviceaktion auf einfache Weise über die (zentrale) Datenverarbeitungsanlage an ein Fahrzeug bzw. einen Fahrzeugführer kommuniziert werden. Somit kann eine umgehende, d.h. schnelle, Information ermöglicht werden.

Es versteht sich von selbst, dass Ausführungsbeispiele der vorliegenden Erfindung auch ein Programm mit einem Programmcode zum Durchführen eines der hierin beschriebenen Verfahren umfasst, wenn der Programmcode auf einem Computer, einem Prozessor oder einer programmierbaren Hardwarekomponente abläuft bzw. dort ausgeführt wird.

Die Erfindung umfasst in einem weiteren Aspekt eine Datenverarbeitungsanlage zur Zustandsüberwachung einer Mehrzahl an Fahrzeugen. Die Datenverarbeitungsanlage umfasst dabei ein Bestimmungsmodul, das eingerichtet ist, auf Basis von Zustandsinformationen aus einer mit der Datenverarbeitungsanlage gekoppelten Datenbank zu bestimmen, ob für ein Fahrzeug der Mehrzahl an Fahrzeugen eine Abweichung eines Zustands des Fahrzeugs von einem Sollzustand vorliegt. Durch diesen Verfahrensschritt kann eine effektive Zustandsüberwachung für ein einzelnes Fahrzeug der Mehrzahl an Fahrzeug und daher für die Gesamtheit der Mehrzahl an Fahrzeugen gewährleistet werden.

Ferner umfasst die Datenverarbeitungsanlage ein Sendemodul, das eingerichtet ist, eine Nachricht an zumindest das eine Fahrzeug unabhängig davon, ob die Abweichung des Zustands des Fahrzeugs von dem Sollzustand vorliegt, zu senden. Die Nachricht enthält dabei eine Information, welche die durch die Zustandsinformationen repräsentierte Abweichung von dem Sollzustand betrifft. Beispielsweise können die Nachricht zellular gemäß einem Mobilfunkstandard, über ein Wireless-Local-Area-Network (WLAN bzw. Wi-Fi), oder auch über ein weiteres Fahrzeug, das als Relais-Station dient (sogenannten Car-to-Car Kommunikation), ausgesendet werden. Somit können dem Fahrzeug schadensunabhängig Informationen über Probleme, Schäden, Defekte oder sonstige Abweichungen vom Sollzustand mitgeteilt werden. Dem Fahrzeug kann somit bereits vor Auftritt eines möglichen Schadens Informationen über diesen mitgeteilt werden. Das Fahrzeug kann die Information weiter verarbeiten.

Durch die Datenverarbeitungsanlage gemäß Ausführungsbeispielen der vorliegenden Erfindung kann somit bereits vor einem tatsächlichen Fehlerauftritt auf (mögliche) Probleme am Fahrzeug hingewiesen werden. Diese Information kann unmittelbar dem Fahrzeug bzw. einem Fahrzeugführer bereitgestellt werden, da die Kommunikation direkt zwischen der (zentralen) Datenverarbeitungsanlage und dem Fahrzeug stattfindet. Ein Tätigwerden Dritter (z.B. einer Werkstatt) kann somit vermieden werden.

In einigen Ausführungsbeispielen umfasst die Datenverarbeitungsanlage zumindest ein Empfangsmodul, das eingerichtet ist, fahrzeugspezifische Zustandsdaten von einzelnen Fahrzeugen der Mehrzahl an Fahrzeugen zu empfangen. Weiterhin umfasst die Datenverarbeitungsanlage ein Erzeugungsmodul, das eingerichtet ist, die Zustandsinformationen basierend auf den empfangenen fahrzeugspezifischen Zustandsdaten zu erzeugen. Es werden also aus Erfahrungswerten anderer Fahrzeuge Schadensmuster bzw. Schadenscharakteristika definiert, die als Zustandsinformationen in der Datenbank gespeichert sind. Fahrzeugführer jüngerer Fahrzeuge können daher von den Erfahrungen bzw. Erkenntnissen älterer Fahrzeuge profitieren, da an den älteren Fahrzeugen aufgetretene Probleme bzw. Defekte aufgrund der an das jüngere Fahrzeug gesendeten Information vor ihrem Auftritt präventiv behoben werden können bzw. dem Fahrzeugführer zumindest mitgeteilt werden können.

Das Bestimmungsmodul der Datenverarbeitungsanlage ist gemäß einigen Ausführungsbeispielen zur Bestimmung, ob eine Abweichung des Zustands des einen Fahrzeugs von dem Sollzustand vorliegt, ferner eingerichtet, eine Charakteristik des einen Fahrzeugs mit den Zustandsinformationen zu vergleichen. Durch das Vergleichen der Charakteristik des Fahrzeugs mit den Zustandsinformationen kann bestimmt werden, ob die durch die Zustandsinformationen repräsentierte Abweichung vom Sollzustand für das eine Fahrzeug relevant ist. Das heißt, durch den Vergleich kann bestimmt werden, ob die Fahrzeugcharakteristik mit dem charakteristisches Profil bzw. Muster des durch die Zustandsinformationen repräsentierten Schadens übereinstimmt. Dadurch kann mit hoher Genauigkeit eine momentane oder zukünftige Abweichung des Fahrzeugs vom Sollzustand bestimmt werden.

In einigen Ausführungsbeispielen ist das Empfangsmodul ferner eingerichtet, Zustandsdaten von dem einen Fahrzeug zu empfangen. Das Erzeugungsmodul ist dabei weiter eingerichtet, einen Zustand des Fahrzeugs aus den von dem Fahrzeug empfangenen Zustandsdaten zu bestimmen, so dass die Charakteristik des Fahrzeugs den Zustand des Fahrzeugs umfasst. Die für den Vergleich mit den Zustandsdaten verwendete Charakteristik des Fahrzeugs umfasst somit den Zustand des Fahrzeugs. Das heißt, der ermittelte Fahrzeugzustand wird durch das Bestimmungsmodul in die Bestimmung, ob eine Abweichung des Fahrzeugzustands vom Sollzustand vorliegt, einbezogen. Dadurch kann mit hoher Genauigkeit festgestellt werden, ob dieses Fahrzeug von der durch die Zustandsinformationen repräsentieren Abweichung vom Sollzustand betroffen ist oder wahrscheinlich betroffen sein wird. Insbesondere, wenn es sich bei dem Zustand des Fahrzeugs um einen prädizierten, zukünftigen Zustand handelt, kann bereits vor Schadenseintritt ermittelt werden, dass das Fahrzeug vermutlich betroffen ist.

Hinsichtlich der weiteren möglichen Eigenschaften der Zustandsinformationen, der Zustandsdaten, des Zustands des einen Fahrzeugs und der an das Fahrzeug gesendeten Nachricht sei auf die obigen Ausführungen verwiesen. Insbesondere kann die in der von dem Sendemodul der Datenverarbeitungsanlage ausgesendeten Nachricht enthaltene Information weiterhin eine Lösung enthalten, um den Sollzustand herzustellen. Hinsichtlich der möglichen Eigenschaften der Lösung sei auf die obigen Ausführungen verwiesen. Auch kann die Datenverarbeitungsanlage eingerichtet sein kontinuierlich zu arbeiten, d.h. zumindest einzelne Verfahrensschritte des erfindungsgemäßen Verfahrens kontinuierlich (z.B. periodisch) auszuführen. Die Datenverarbeitungsanlage kann alternativ oder ergänzend auch zeitlich eingeschränkt betrieben werden (z.B. saisonal oder nur zu bestimmten Tages- oder Nachtzeiten).

Wie oben ausgeführt, können die einzelnen Module und Element der (zentralen) Datenverarbeitungsanlage an einem selben Ort angeordnet sein oder an verschiedenen Orten. Beispielsweise können die einzelnen Module der Datenverarbeitungsanlage als Hard- oder Software in einem oder mehreren gekoppelten Rechenzentren ausgeführt sein. Die einzelnen Module stellen dabei für einen Betreiber der Datenverarbeitungsanlage (z.B. einen Fahrzeughersteller oder einen Fuhrparkbetreiber) ein System dar, dass zentral die Überwachung der Mehrzahl an Fahrzeugen durchführt. Die Datenverarbeitungsanlage ist somit insbesondere kein verteiltes Netzwerk an Recheneinheiten, die jeweils für sich eine Zustandsüberwachung eines oder mehrerer Fahrzeuge ausführen. Vielmehr stellt die Datenverarbeitungsanlage ein Backend dar, in dem die zentrale Verarbeitung der eingehenden Daten stattfindet.

Ausführungsbeispiele der vorliegenden Erfindung werden nachfolgend, Bezug nehmend auf die beigefügten Figuren, näher erläutert. Es zeigen:
Fig. 1 zeigt ein Flussdiagram eines Ausführungsbeispiels eines Verfahrens für eine Datenverarbeitungsanlage zur Zustandsüberwachung einer Mehrzahl an Fahrzeugen;
Fig. 2 zeigt schematisch eine Zustandsüberwachung eines Fahrzeuges; und
Fig. 3 zeigt schematisch die Verwendung eines Prädiktionsmodells zur Bestimmung eines Zustands eines Fahrzeugs.

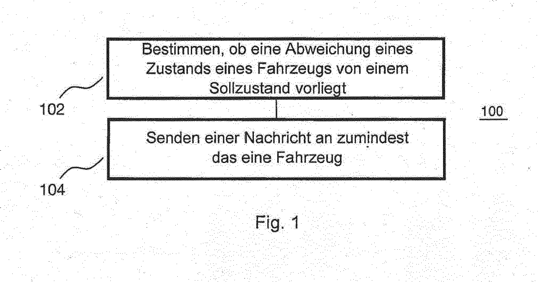

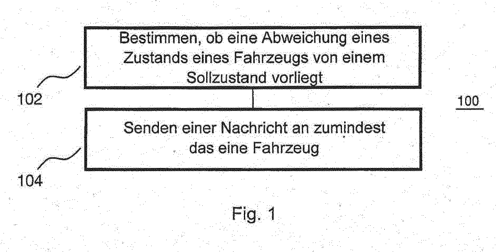

In der Fig. 1 ist ein Verfahren 100 für eine Datenverarbeitungsanlage zur Zustandsüberwachung einer Mehrzahl an Fahrzeugen gezeigt. Das Verfahren 100 umfasst dabei ein Bestimmen 102, ob für ein Fahrzeug der Mehrzahl an Fahrzeugen eine Abweichung eines Zustands des Fahrzeugs von einem Sollzustand vorliegt. Der Schritt des Bestimmens 102 basiert dabei auf Zustandsinformationen aus einer mit der Datenverarbeitungsanlage gekoppelten Datenbank. Wie oben ausgeführt, können die Zustandsinformationen z.B. auf von einzelnen Fahrzeugen der Mehrzahl an Fahrzeugen empfangenen fahrzeugspezifischen Zustandsdaten oder einer Eingabe eines Benutzers der Datenverarbeitungsanlage basieren.

Ferner umfasst das Verfahren 100 ein Senden 104 einer Nachricht an zumindest das eine Fahrzeug unabhängig davon, ob die Abweichung des Zustands des Fahrzeugs von dem Sollzustand vorliegt. Die Nachricht enthält dabei eine Information, welche die durch die Zustandsinformationen repräsentierte Abweichung von dem Sollzustand betrifft. Wie oben ausgeführt, kann die Information u.a. Informationen über die repräsentierte Abweichung vom Sollzustand enthalten, d.h. Informationen über einen möglichen bzw. bestehenden Schaden am Fahrzeug, als auch Informationen, um den Sollzustand herzustellen.

Durch das Verfahren 100 kann somit eine effektive Zustandsüberwachung für ein einzelnes Fahrzeug der Mehrzahl an Fahrzeug und daher für die Gesamtheit der Mehrzahl an Fahrzeugen gewährleistet werden. Ferner kann bereits vor einem tatsächlichen Fehlerauftritt auf (mögliche) Probleme am Fahrzeug hingewiesen werden. Diese Information kann unmittelbar dem Fahrzeug bzw. einem Fahrzeugführer bereitgestellt werden, da die Kommunikation direkt zwischen der Datenverarbeitungsanlage und dem Fahrzeug stattfindet. Ein Tätigwerden Dritter kann somit vermieden werden.

Weitere Details und Aspekte des Verfahrens sind vorangehend in Zusammenhang mit einem oder mehreren Ausführungsbeispielen beschrieben. Das Verfahren kann eines oder mehrere optionale Merkmale gemäß einem oder mehreren der hier beschriebenen Ausführungsbeispiele umfassen.

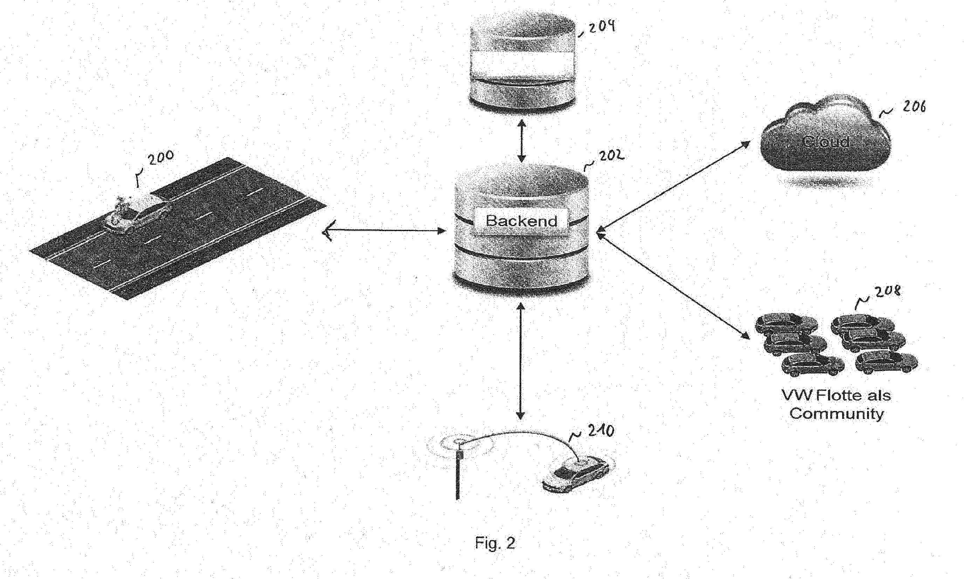

In der Fig. 2 ist schematisch ein Beispiel einer Zustandsüberwachung eines Fahrzeugs 200 gemäß Ausführungsbeispielen der Erfindung gezeigt. Das Fahrzeug 200 sendet z.B. kontinuierlich (periodisch) Zustandsdaten an eine zentrale Datenverarbeitungsanlage (ein Backend) 202. Die Datenverarbeitungsanlage 202 umfasst ein Empfangsmodul zum Empfangen der Zustandsdaten von dem Fahrzeug 200. Ein Erzeugungsmodul der Datenverarbeitungsanlage 202 bestimmt aus den von dem Fahrzeug 200 empfangenen Zustandsdaten einen Zustand des Fahrzeugs 200, so dass eine Charakteristik des Fahrzeugs 200, die dessen Zustand beinhaltet, bereitgestellt ist.

Weiterhin umfasst die Datenverarbeitungsanlage 202 ein Bestimmungsmodul, um zu bestimmen, ob für das Fahrzeug 200 eine Abweichung des Zustands des Fahrzeugs von einem Sollzustand vorliegt. Das Bestimmungsmodul vergleicht dafür den durch das Erzeugungsmodul bestimmten Zustand des Fahrzeugs 200 mit Zustandsinformationen aus einer mit der zentralen Datenverarbeitungsanlage 202 gekoppelten Datenbank. Die Zustandsinformationen repräsentieren dabei die Abweichung des Zustands des Fahrzeugs 200 von dem Sollzustand. Wie in der Fig. 2 angedeutet, können die Zustandsinformationen auf einer Vielzahl an Informationen beruhen. Das Erzeugungsmodul kann zur Erzeugung der Zustandsinformationen neben von einer Mehrzahl an Fahrzeugen 208 empfangenen Zustandsdaten auf frei zugängliche Daten aus dem Internet 206, Wartungsdaten eines Fahrzeugherstellers 204 oder auch Wartungsdaten einer Werkstatt 210 zugreifen. Wie aus der Fig. 2 ersichtlich ist, kann die Datenverarbeitungsanlage 202 von verschiedenen dezentralen Quellen Informationen einholen. Die Auswertung der Informationen sowie die Kommunikation mit dem Fahrzeug finden jedoch durch ein zentrales System - nämlich der Datenverarbeitungsanlage 202 - statt, auf dem das Verfahren ausgeführt wird.

Unabhängig vom Vorliegen der Abweichung des Zustands des Fahrzeugs 200 vom Sollzustand, sendet ein Sendemodul der Datenverarbeitungseinrichtung 202 eine Nachricht an das Fahrzeug 200. Die Nachricht enthält dabei eine die durch die Zustandsinformationen repräsentierte Abweichung des Zustands des Fahrzeugs 200 von dem Sollzustand betreffende Information. Das heißt, das Fahrzeug kann unabhängig vom tatsächlichen Vorliegen der Abweichung des Zustands des Fahrzeugs 200 vom Sollzustand über Probleme, Defekt etc. informiert werden. Das Fahrzeug 200 kann die Information z.B. an einen Fahrzeugführer bzw. sonstige Insassen des Fahrzeugs ausgeben. Diese können somit auf die Nachricht reagieren und beispielsweise, im Falle eines möglichen oder wahrscheinlichen Problems, eine Werkstatt aufsuchen.

Die Nachricht kann dabei auch eine Lösung enthalten, um den Sollzustand des Fahrzeugs 200 herzustellen. Die Lösung kann beispielsweise darin bestehen, einen Hinweis an den Fahrer auszugeben, eine Werkstätte aufzusuchen. Alternativ kann die Lösung Reparaturhinweise zur Behebung des durch die Zustandsinformationen repräsentieren Defekts beinhalten. Auch kann die Lösung in einer Anweisung an das Fahrzeug bestehen, falls das Fahrzeug das Problem selbst beheben kann. Beispielsweise kann die Lösung ein Zurücksetzten einer Soft- oder Firmware des Fahrzeugs oder ein Updaten einer Soft- oder Firmware des Fahrzeugs beinhalten. Die für das Update notwendigen Informationen können dabei Teil der an das Fahrzeug 200 gesendeten Nachricht sein.

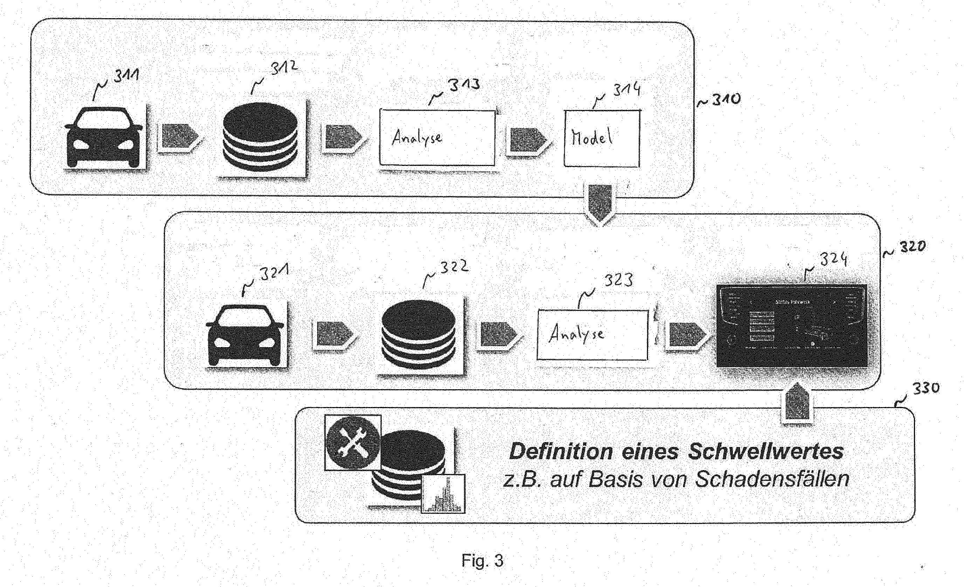

Bei dem durch das Erzeugungsmodul der zentralen Datenverarbeitungsanlage 202 bestimmten Zustand des Fahrzeugs 200 kann es sich z.B. um einen zukünftigen Zustand des Fahrzeugs 200 handeln, der auf einem Prädiktionsmodel und den von dem Fahrzeug 200 empfangen Zustandsdaten basiert. In der Fig. 3 ist daher zum einen gezeigt, wie ein Prädiktionsmodell erstellt werden kann, und zum anderen, wie eine Aussage über den zukünftigen Zustand eines Fahrzeugs aus dem Prädiktionsmodell ermittelt werden kann.

Dafür ist zunächst in einem Schritt 310 ein Prädiktionsmodell 314 zu erstellen. Dafür können z.B. von einem oder mehreren ausgewählten Fahrzeugen 311 Zustandsdaten 312 erhoben und analysiert werden. Bei einer Vielzahl von Daten kann dies automatisch durch die Verwendung geeigneter Algorithmen geschehen. Aus der Analyse 313 geht schließlich ein Zustands- bzw. Prädiktionsmodell 314 hervor. In das Modell können weiterhin mathematische sowie physikalische und ingenieurswissenschaftliche Erkenntnisse, Theorien oder Erfahrungswerte eingehen. Auch nach der Erstellung des Prädiktionsmodells 314 kann dieses weiter verfeinert werden. Unter anderem können weitere Zustandsdaten von Fahrzeugen in das Modell eingehen, um eine bessere Deckung von Modell und Realität zu erzielen. Dies ist auch als "trainieren" des Modells bekannt.

In einem zweiten Schritt 320 werden von einem zu überwachenden Fahrzeug 321 Zustandsdaten 322 gesammelt und in das erstellte Prädiktionsmodell zur Analyse 323 eingespeist. Auf Grundlage der zugeführten Daten kann nunmehr ein zukünftiger Zustand 324 des Fahrzeugs durch das Modell erzeugt werden. Mit anderen Worten werden im Schritt 320 die Zustandsdaten mit Hilfe des Prädiktionsmodells ausgewertet.

Ob nun ein kritischer bzw. problematischer Zustand des Fahrzeugs vorliegt, kann durch geeignete Auswahlkriterien 330 für die Zustandsbestimmung ermittelt werden. Bei den Auswahlkriterien kann es sich um Fahrzeugparameter bzw. -charakteristika handeln, die typisch für einen bestimmten Schaden oder ein bestimmtes Problem sind. Mit anderen Worten: Die von den Zustandsinformationen umfassten Fahrzeugparameter bzw. -charakteristika für den von den Zustandsinformationen repräsentierten Schaden werden mit dem prädizierten Zustand verglichen, um einen wahrscheinlichen, zukünftigen Schaden am Fahrzeug zu prädizieren. Die so gewonnen Erkenntnisse können dem Fahrzeug und somit auch einem Fahrzeugführer mitgeteilt werden. Dieser kann somit bereits präventiv agieren, bevor ein wahrscheinlicher Schaden überhaupt auftritt. Insbesondere können dem Fahrzeug bereits vor Schadenseintritt Lösungen für das Beheben des Schadens übermittelt werden.

### Bezugszeichenliste

- 100: Verfahren für eine Datenverarbeitungsanlage
- 102: Bestimmen, ob eine Abweichung eines Zustands eines Fahrzeugs von einem Sollzustand vorliegt
- 104: Senden einer Nachricht an das Fahrzeug
- 200: Fahrzeug
- 202: Datenverarbeitungsanlage
- 204: Wartungsdaten eines Fahrzeugherstellers
- 206: frei zugängliche Informationen im Internet
- 208: Zustandsdaten einer Mehrzahl an Fahrzeugen
- 210: Wartungsdaten einer Werkstatt
- 310: Erstellen eines Prädiktionsmodells
- 311: ausgewähltes Fahrzeug
- 312: Zustandsdaten
- 313: Analyse
- 314: Prädiktionsmodel
- 320: Auswerten von Zustandsdaten mit Hilfe des Prädiktionsmodells
- 321: zu überwachendes Fahrzeug
- 322: Zustandsdaten
- 323: Analyse
- 324: zukünftiger Zustand des Fahrzeugs
- 330: Auswahlkriterien für die Zustandsbestimmung

## Patentansprüche

1. Verfahren (100) für eine Datenverarbeitungsanlage zur Zustandsüberwachung einer Mehrzahl an Fahrzeugen, wobei das Verfahren Folgendes umfasst:
Bestimmen (102) auf Basis von Zustandsinformationen aus einer mit der Datenverarbeitungsanlage gekoppelten Datenbank, ob für ein Fahrzeug der Mehrzahl an Fahrzeugen eine Abweichung eines Zustands des Fahrzeugs von einem Sollzustand vorliegt; und
Senden (104) einer Nachricht an zumindest das eine Fahrzeug unabhängig davon, ob die Abweichung des Zustands des Fahrzeugs von dem Sollzustand vorliegt, wobei die Nachricht eine Information enthält, welche die durch die Zustandsinformationen repräsentierte Abweichung von dem Sollzustand betrifft.

2. Verfahren nach Anspruch 1, wobei das Verfahren ferner umfasst:
Empfangen, an der Datenverarbeitungsanlage, von fahrzeugspezifischen Zustandsdaten von einzelnen Fahrzeugen der Mehrzahl an Fahrzeugen;
Erzeugen der Zustandsinformationen basierend auf den empfangenen fahrzeugspezifischen Zustandsdaten.

3. Verfahren nach Anspruch 2, wobei das Bestimmen (102), ob eine Abweichung des Zustands des einen Fahrzeugs von dem Sollzustand vorliegt, Folgendes umfasst:
Vergleichen einer Charakteristik des einen Fahrzeugs mit den Zustandsinformationen.

4. Verfahren nach Anspruch 3, wobei das Vergleichen der Charakteristik des einen Fahrzeugs mit den Zustandsinformationen Folgendes umfasst:
Empfangen von Zustandsdaten von dem einen Fahrzeug; und
Bestimmen eines Zustands des Fahrzeugs aus den von dem Fahrzeug empfangenen Zustandsdaten, wobei die Charakteristik des Fahrzeugs den Zustand des Fahrzeugs umfasst.

5. Verfahren nach Anspruch 4, wobei der Zustand des einen Fahrzeugs ein zukünftiger Zustand ist, und wobei der zukünftige Zustand auf einem Prädiktionsmodell und den von dem einen Fahrzeug empfangenen Zustandsdaten basiert.

6. Verfahren nach einem der Ansprüche 2 bis 5, wobei die Zustandsdaten Informationen über Fehler im Fahrzeug oder Informationen über eine Fahrzeugbelastung enthalten.

7. Verfahren nach einem der Ansprüche 2 bis 6, wobei die Zustandsinformationen weiterhin auf frei zugänglichen Daten aus dem Internet und / oder Wartungsdaten eines Fahrzeugherstellers und / oder Wartungsdaten einer Werkstatt basieren.

8. Verfahren nach einem der vorhergehenden Ansprüche, wobei die Zustandsinformationen zumindest eine Lösung enthalten, um den Sollzustand herzustellen, und wobei die in der Nachricht enthaltene Information die Lösung umfasst.

9. Verfahren nach Anspruch 8, wobei die Lösung auf von der Mehrzahl an Fahrzeugen empfangenen Zustandsdaten und / oder frei zugänglichen Daten aus dem Internet und / oder Wartungsdaten eines Fahrzeugherstellers und / oder Wartungsdaten einer Werkstatt basiert.

10. Verfahren nach einem der vorhergehenden Ansprüche, wobei das Bestimmen (102), ob eine Abweichung des Zustands des Fahrzeugs von dem Sollzustand vorliegt, periodisch erfolgt.

11. Verfahren nach einem der vorhergehenden Ansprüche, wobei die Nachricht an alle Fahrzeuge der Mehrzahl an Fahrzeugen gesendet wird, falls eine Abweichung des Zustands des Fahrzeugs von dem Sollzustand vorliegt und das Fahrzeug zu einer vorbestimmten Gruppe der Mehrzahl von Fahrzeugen gehört.

12. Verfahren nach einem der vorhergehenden Ansprüche, wobei die Zustandsinformationen auf einer Eingabe eines Benutzers der Datenverarbeitungsanlage basieren.

13. Datenverarbeitungsanlage zur Zustandsüberwachung einer Mehrzahl an Fahrzeugen, wobei die Datenverarbeitungsanlage Folgendes umfasst:
ein Bestimmungsmodul, das eingerichtet ist, auf Basis von Zustandsinformationen aus einer mit der Datenverarbeitungsanlage gekoppelten Datenbank zu bestimmen, ob für ein Fahrzeug der Mehrzahl an Fahrzeugen eine Abweichung eines Zustands des Fahrzeugs von einem Sollzustand vorliegt; und
ein Sendemodul, das eingerichtet ist, eine Nachricht an zumindest das eine Fahrzeug unabhängig davon, ob die Abweichung des Zustands des Fahrzeugs von dem Sollzustand vorliegt, zu senden, wobei die Nachricht eine Information enthält, welche die durch die Zustandsinformationen repräsentierte Abweichung von dem Sollzustand betrifft.

14. Datenverarbeitungsanlage nach Anspruch 13, wobei die Datenverarbeitungsanlage Folgendes umfasst:
ein Empfangsmodul, das eingerichtet ist, fahrzeugspezifische Zustandsdaten von einzelnen Fahrzeugen der Mehrzahl an Fahrzeugen zu empfangen;
ein Erzeugungsmodul, das eingerichtet ist, die Zustandsinformationen basierend auf den empfangenen fahrzeugspezifischen Zustandsdaten zu erzeugen.

15. Datenverarbeitungsanlage nach Anspruch 14, wobei das Bestimmungsmodul zur Bestimmung, ob eine Abweichung des Zustands des einen Fahrzeugs von dem Sollzustand vorliegt, ferner eingerichtet ist, eine Charakteristik des einen Fahrzeugs mit den Zustandsinformationen zu vergleichen.
